# EUROPÄISCHE PATENTSCHRIFT

(11) **EP 0 646 087 B1**
(45) Veröffentlichungstag und Bekanntmachung des Hinweises auf die Patenterteilung: **30.05.2001**
(21) Anmeldenummer: 94913515.6
(22) Anmeldetag: 02.04.1994
(51) Int. Cl.: B65D 65/46, C08L 89/06

(54) **BIOLOGISCH ABBAUBARE SAMMEL- ODER TRANSPORTBEHÄLTNISSE**
BIODEGRADABLE STORAGE OR TRANSPORT CONTAINERS
RECIPIENTS DE STOCKAGE OU DE TRANSPORT BIODEGRADABLES

(30) Priorität: 21.04.1993 DE 4312977
(43) Veröffentlichungstag der Anmeldung: 05.04.1995
(73) Patentinhaber: Naturin GmbH & Co, D-69469 Weinheim (DE)
(72) Erfinder: MASER, Franz, Dr., D-68159 Mannheim (DE); HINKEL, Rolf, D-64646 Heppenheim (DE); HUMMEL, Matthias, D-69517 Gorxheimertal (DE); ERK, Gayyur, Dr., D-69469 Weinheim (DE)
(74) Vertreter: Siewers, Gescha, Dr.
(86) Internationale Anmeldenummer: EP9401034
(87) Internationale Veröffentlichungsnummer: WO9424015

(56) Entgegenhaltungen:
- EP-A- 0 093 678
- WO-A-93/20119
- DE-A- 4 009 408
- DE-A- 4 238 770
- DE-C- 659 490
- DE-U- 9 006 921
- DE-U- 9 012 269
- US-A- 3 259 302
- DATABASE WPI Section Ch, Week 8118, Derwent Publications Ltd., London, GB; Class B04, AN 81-32557D & WO,A,81 00963 (PENTAPHARM AG) 16. April 1981
- H. Stryer, "Biochemistry", 3. Edition, 1988, Freeman & Co, New York, Seiten 260-273

## Beschreibung

Die Erfindung betrifft biologisch abbaubare Sammel- oder Transportbehältnisse.

Die ständige wachsende Müllflut hat dazu geführt, daß nunmehr verstärkt versucht wird, entweder auf nicht oder nur schwierig biologisch abbaubare Stoffe für Verpackungszwecke zu verzichten oder wiederverwendbare Reststoffe aus Hausmüll oder gewerblichem Müll separat zu sammeln und einer Regenerierung oder Weiterverarbeitung zuzuführen. Die hierfür vorgeschlagenen Systeme beruhen alle auf einer möglichst sauberen Trennung der anfallenden Müllmengen in metallhaltige Reste, Kunststoffe und organischem Müll, der sich im Falle von Hausmüll überwiegend aus Speiseresten zusammensetzt. Probleme bereitet aber bisher aber noch die Sortierung des anfallenden Mülls, denn Recycling setzt das getrennte Sammeln und Aufbewahren der unterschiedlichen Müllsorten voraus, wobei, soweit es beispielsweise Hausmüll anbelangt, gerade organischer Abfall auch bei bereits relativ kurzer Verwahrung zu Geruchsbelästigungen führen kann. Es ist deshalb üblich, daß organische Reste in der Regel in Kunststoffbeuteln oder -säcken gesammelt werden, die ein relativ geruchsdichtes Verschliessen gestatten. Dies führt allerdings dazu, daß das Weiterverarbeiten schwierig wird, denn die auf Tierfutter oder Bodenverbesserungsmittel aufzuarbeitenden Reste müssen in der Regel vorher aus den Umhüllungen ausgeschüttet werden, da Kunststoffbeutel nicht oder nur teilweise einer Weiterverarbeitung auf die obengenannten Endprodukte zugänglich sind. Gerade wenn beabsichtigt ist, die organischen Reste auf Tierfutter zu verarbeiten, ist die Verwendung von Kunststoffen denkbar unerwünscht, aber bisher kaum zu umgehen.

Weiterhin besteht ein Bedürfnis danach, Transportbehältnisse im Haushalts- oder Agrarbereich, die nur einmal verwendet werden und heute in der Regel aus Kunststoffen hergestellt sind, durch Materialien zu ersetzen, die im Vergleich zu Kunststoffen wesentlich schneller biologisch abbaubar sind. Beispielsweise werden heute Tierfuttermittel, Düngemittel für Gartenbau und Landwirtschaft, Bodenverbesserungsmittel für den Gartenbau wie sogenannte Einheitserden, Verpackungen für landwirtschaftliche Produkte wie beispielsweise Obst, Gemüse und Kartoffeln meist aus Kunststoff hergestellt, die dann entweder den Hausmüll belasten oder, wenn sie nicht dem Müll zugeführt werden, jahrelang die Landschaft belasten wie im Falle von liegengelassenen Dünge- oder Tierfuttermittelsäcken.

Es hat bereits zahlreiche Vorschläge gegeben, Sammel- oder Transportbehälter aus verschiedenen biologisch abbaubaren Materialien herzustellen, und zwar insbesondere auf Basis von Papier, aber dabei hat sich herausgestellt, daß Papierverpackungen bei weitem nicht für alle Produkte verwendbar sind, wenn eine gewisse Naß- und Reißfestigkeit gefordert ist. Es gibt auch schon Vorschläge, wie beispielsweise aus der DE-U-90 06 921 oder DE-U-90 12 269, Tierhaut als Verpackungsmittel für Kleintierfutter anstelle von Papier oder Kunststoff einzusetzen, aber diese Vorschläge haben sich bisher nicht durchsetzen können. Im übrigen würde solches Material die Herstellung von Sammel- oder Transportbehältnissen größeren Ausmaßes sowieso nicht gestatten.

Erfindungsgemäß werden nunmehr biologisch abbaubare Sammel- und Transportbehältnisse für Müll, Agrarprodukte, Dünge- oder Bodenverbesserungsmittel sowie Tierfuttermittel auf Basis von Kollagen vorgeschlagen, die dadurch gekennzeignet sind, daß sie mindestens 50%, bezogen auf das Trockengewicht, Kollagenfasern enthalten und das Material eine Reißvestigkeit von mindestens 10 N bei 70% relativer feuchtigkeit aufweist.

Als Kollagen bezeichnet man die langfaserigen, linearcolloiden hochmolekularen Skleroproteine der extrazellulären Matrix, die überwiegend im Bindegewebe, aber auch in der eiweißhaltigen Grundsubstanz von Knochen und Dentin vorkommen. Die Zusammensetzung des Kollagens variiert je nach Herkunft. Es gibt verschiedene Typen, die jedoch nicht alle eine eindeutige Faserstruktur besitzen. Kollagene werden in den Bindegewebszellen zunächst als Prokollagenketten synthetisiert, die dann hydroxiliert und glycosiliert werden, woraufhin schließlich drei der in Helixform vorliegenden Ketten zusammentreten und sich wiederum zu einer Helix verdrehen. Diese Substanzen werden in den extrazellulären Raum abgegeben, indem endständige Peptide abgespalten werden, so daß schließlich das sogenannte Tropokollagen entsteht, das sich zu Fibrillen zusammenlagert. Während das Tropokollagen noch salz- bzw. säurelöslich ist, sind Kollagenfibrillen unlöslich.

Gegen enzymatische Zersetzung sind die Kollagene ziemlich stabil; ein enzymatischer Abbau nativen Kollagens läßt sich im wesentlichen nur durch Kollagenase erreichen. Die nach der Proteolyse der Kollagenfibrillen dann entstehenden löslichen Spaltprodukte werden durch andere Proteasen zu Peptiden und Aminosäuren weiterhydrolisiert. Es ist aber beispielsweise möglich, Kollagene unter thermischer Belastung und Druck, so beispielsweise bei über 100°C und einem Druck von etwa 3 bar oder darüber, relativ schnell bis zur Stufe der Gelatine zu hydrolisieren.

Die Gewinnung von Kollagen erfolgt in der Regel aus Rinderhautspalten nach einem dem Fachmann geläufigen Aufbereitungsverfahren, wie beispielsweise in der DE-PS 65 94 90 beschrieben. Die Rinderhautspalten werden in geeigneter Weise vorzerkleinert, dann wird die Schwartenmasse mit Eis und Wasser aufgenommen und mit einem physiologisch unbedenklichen Feuchthaltemittel versetzt. Die Suspension wird dann sorgfältig gemischt und der pH-Wert auf relativ starksauer eingestellt. Daran anschliessend werden die Partikel der Suspension weiterzerkleinert bis schließlich eine makroskopisch homogen erscheinende gelartig gequollene Dispersion entsteht, die in an sich bekannter Weise beispielsweise zu Folien weiterverarbeitet werden kann. Derartige Kollagenfolien werden bisher in grossem Maßstab als Verpackungsfolien für Lebensmittel, insbesondere als Wursthüllen, aber auch für medizinische Zwecke beispielsweise als Wundabdeckung mit hautähnlichen Eigenschaften verwendet.

WO-A-9320119 betrifft ein biologisch abbaubares wasserresistentes Polymermaterial. Dieses Polymermaterial besteht aus Derivaten von löslichem Kollagen. Diese Druckschrift beschreibt jedoch nicht, daß zur Herstellung von biologisch abbaubaren Sammel- und Transportbehältnissen Kollagenfasern verwendet werden können.

DE 42 38 770 betrifft verrottbare faserverstärkte Folien, bei denen auf einem Beschichtungsträger eine Beschichtung aus einer selbstvernetzenden Dispersion eines Vinylacetat-Ethylen-Copolymerisates aufgebracht ist. Zu den verwendbaren Fasern wird auch Kollagen gezählt. Diese Entgegenhaltung betrifft aber Verpackungshüllen für Lebensmittel und Bestandteile von Wegwerfwindeln, so daß der Fachmann keinen Hinweis erhält, Sammel- und Transportbehältnisse aus Kollagenfasern herzustellen.

WO-A-81 00 963 betrifft filz- schwamm-oder vliesähnliche Kollagenprodukte, die nach einem speziellen Verfahren hergestellt werden und die eine verbesserte Naßreißfestigkeit aufweisen. Diese Naßreißfestigkeit übersteigt jedoch nie den Wert von etwa 2 N.

EP 0093678 betrifft im wesentlichen Leichensäcke aus einem Laminat, nämlich einem Träger aus Cellulosefasern, der mit einer Beschichtung aus abbaubaren die Cellulose verklebenden Substanzen versehen ist, wozu beispielsweise Viskose, Kasein, Alginate und Kollagene wie Gelatine verwendet werden können. Der Fachmann entnimmt aber aus dieser Offenbarung, daß nicht Kollagene, insbesondere keine Kollagenfasern, sondern klebfähige Kollagenabbauprodukte gemeint sind. Diese Entgegenhaltung beschreibt nicht, daß Kollagenfasern zur Verwendung von biologisch abbaubaren Sammel- und Transoprtbehältnissen verwendet werden können.

DE 659 490 betrifft ein Verfahren zur Herstellung von Wursthüllen aus Kollagenfasern. Diese Entgegenhaltung gibt aber dem Fachmann keinen Hinweis, biologisch abbaubare Sammel- und Transportbehältnisse aus Kollagenfasern herzustellen. DE 90 06 921 und DE 90 12 269 beschreiben Verpackungen für Tier- bzw. Hundetrockenfutter aus Tierhaut. Diese Entgegenhaltungen beschreiben jedoch nicht, daß Sammel- und Transportbehältnisse mit der in Anspruch 1 angegebenen Reißfestigkeit aus diesen Materialien hergestellt werden können.

Der Erfindung liegt daher die Aufgabe zugrunde, neue Einsatzmöglichkeiten von im wesentlichen aus Kollagenfasern bestehenden Materialien vorzuschlagen.

Überraschend wurde jetzt festgestellt, daß im wesentlichen aus Kollagenfasern bestehendes Material hervorragend als Material für Sammel- oder Transportbehältnisse, insbesondere für Müll, landwirtschaftliche Produkte und ähnliches geeignet ist, denn dieses Material läßt sich wie Kunststoffolie beispielsweise in Beutel- oder Sackform verarbeiten; es kann je nach Art der verwendeten Kollagene und Herstellungsverfahren in naß- und hochfester Modifikation hergestellt werden und es ist relativ keimarm und lagerfähig und für Sauerstoff und Kohlendioxid nur beschränkt durchlässig. Außerdem ist solches Material vollkommen weiterverarbeitbar, da es beispielsweise auch zusammen mit organischem Inhalt einer thermischen Hydrolyse unterzogen werden kann und dabei in kurzer Zeit in Gelatine übergeht. Aber selbst wenn dieses Material nicht einer besonderen Behandlung unterzogen wird, wird es in relativ kurzer Zeit in der freien Natur biologisch zersetzt zu ökologisch unbedenklichen Endprodukten.

Das erfindungsgemäß eingesetzte Material kann außer Kollagenfasern ggf. auch noch andere biologisch abbaubare und ökologisch unbedenkliche Substanzen enthalten, wie beispielsweise andere Proteine, Hydrokolloide, Zellulose, Polysacheride, Stärken oder hydrophile abbaubare synthetische Polymere. In der Regel wird das verwendete Material, bezogen auf das Trokkengewicht, mindestens 50 % Kollagenfasern enthalten.

Die erfindungsgemäßen Sammel- und Transportbehältnisse werden vorzugsweise in Sack- oder Beutelform hergestellt, beispielsweise als Transportsäcke für Tierfutter, Düngemittel, Rindenmulch, Bodenverbesserungsmittel oder als Einsatz für die verschiedenen Typen der heute üblichen Haushaltsmülleimer. Das Material, insbesondere wenn in Folienform, kann aber auch zu komplizierteren Einsätzen verarbeitet werden, beispielsweise für Abfallbehälter in Großbetrieben wie Restaurants oder Kantinen oder sie können auch im Kleinformat als Tüten hergestellt werden, wenn in Haushalten aufgrund der Personenzahl oder in Büros oder ähnlichen Einrichtungen nur wenig Speisereste anfallen. Für die üblichen Größen von Müllsäcken und - beuteln wird in der Regel Schlauchfolie verarbeitet, die an einer Seite in an sich bekannter Weise verschlossen wird wie beispielsweise durch Verschweißen, Vernähen, Verklippen oder Verkleben. Als Klebstoffe können physiologisch unbedenkliche Kleber eingesetzt werden, wie sie heute beispielsweise bereits in der Nahrungsmitteltechnologie für andere Verpackungszwecke Anwendung finden; hierbei handelt es sich in der Regel um ungesättigte Polyesterharze oder modifizierte Stärken. Der Anteil an organischen Klebstoffen ist so gering, daß er die Weiterverarbeitbarkeit der aus Kollagenfasern bestehenden Behältnisse nicht stört. Für Haushaltszwecke können die erfindungsgemässen Sammelbehältnisse beispielsweise in Rollenform mit Perforierung zum Abreissen einzelner Beutel oder als einzeln herausziehbare gefaltete Beutel nach Art der Verpackung der Haushaltswischtücher aus Papier angeboten werden. Der Verschluß der Beutel oder Säcke kann, obgleich wegen des Materialverbrauches nicht wünschenswert, durch Verknoten erfolgen, aber vorzugsweise werden die Behältnisse mit einem separatem Verschluß wie beispielsweise Schnur aus natürlichem pflanzlichen oder tierischen Fasern oder Klipps aus wiederverwertbarem Material wie Tierhaut verschlossen. Solche Verschlüsse können bei Müllbeuteln beispielsweise beigefügt oder am Behältnis selbst durch Punktklebung befestigt werden. Andererseits können die Behältnisse aber auch verklebt werden, beispielsweise mit Hilfe von klebfähigen Kollagenzubereitungen oder anderen physiologisch unbedenklichen Klebstoffen oder auch vernäht, und zwar an einem oder beiden Enden, wie sich dies beispielsweise bei Säcken für Tierfutter, Düngemittel und ähnlichem anbietet. Selbstverständlich sind aber auch andere Verschlußmöglichkeiten denkbar, die dem Fachmann aufgrund seines allgemeinen Fachwissens geläufig sind.

Die erfindungsgemäß eingesetzten Kollagenmaterialien werden in an sich bekannter Weise hergestellt, beispielsweise in Form von Folienmaterial, das gleichmäßig in Struktur und Farbe ist und keine Partikeleinschlüsse aufweist. Das verwendete Kollagenfasermaterial muß naß- und reißfest sein, denn bei der Verwendung beispielsweise zum Sammeln von Speiseresten ist damit zu rechnen, daß diese in der Regel eine gewisse Menge Feuchtigkeit enthalten, so daß die Folie in der Lage sein muß, die Feuchtigkeit zurückzuhalten, wobei aber das Behältnis transportierbar bleiben muß ohne daß es zu Reißen oder Platzen durch das Gewicht des Inhaltes kommt. Die Reißfestigkeit des Materials sollte daher mindestens 10 N in 70% relativer Feuchtigkeit betragen.

Das verwendete Kollagenfasermaterial sollte nur beschränkt für Sauerstoff und Kohlendioxid durchlässig sein, und zwar insbesondere bei Verwendung als Müllsack. Es ist bekannt, daß die Geruchsentwicklung aus organischem Material auf der Anwesenheit und dem Wachstum von aeroben Bakterien beruht, während die Besiedlung mit anaeroben Bakterien zu einer wesentlich geringeren Geruchsentwicklung führt. Die Gasdurchlässigkeit für Sauerstoff und Kohlendioxid hängt einerseits von der Struktur und Art des verwendeten Kollagens ab, andererseits kann sie ggf. durch Lackieren oder Kaschieren des Kollagenmaterials mit einem Film aus physiologisch unbedenklichen Polymeren wie beispielsweise Polyestern oder Polyethylen verbessert werden. Der Anteil der dabei eingesetzten Kunststoffe ist so gering, daß dadurch die spätere Verarbeitbarkeit nicht beeinträchtigt wird.

Da es sich bei dem Kollagensubstrat um organisches Material handelt, sollte nur solches Material eingesetzt werden, das einen Ausgangskeimgehalt von unter 10 000 KbE/g unter Ausschluß von pathogenen Mikroorganismen aufweist. Zwar sollten die Sammel- und Transportbehältnisse in der Regel vor Verwendung kühl, trocken und nicht unter direkter Sonneneinstrahlung gelagert werden, aber sie müssen noch für 12 Monate bei 23°C lagerfähig sein, ohne daß die mikrobiologische Bedenklichkeit tangiert wird. Der Keimgehalt des verwendeten Materials kann beispielsweise durch Bestrahlungmit UV-Licht oder Gamma-, Beta- oder Neutronenstrahlen auf praktisch 0 reduziert werden.

Das für die Herstellung der Sammel- und Transportbehältnisse verwendete Material aus Kollagenfasern wird im übrigen so ausgewählt, daß die daraus hergestellten Folien bei thermischer Hydrolyse beispielsweise bei Temperaturen zwischen etwa 100 bis 130°C und einem Druck von 3 bis 5 bar in wäßrigem Millieu innerhalb von weniger als 1 Stunde bei einem pH-Wert von 4 bis 8 vollständig in Gelatine überführbar sind.

Die erfindungsgemäßen biologisch abbaubaren Sammel- oder Transportbehälter können für eine Vielzahl von Zwecken eingesetzt werden, beispielsweise zum Sammeln von organischem Müll in Haushalt oder Gewerbe, der einer Weiterverarbeitung zugeführt werden soll, zum Transport von Agrarprodukten wie beispielsweise Kartoffeln und anderem Gemüse oder Obst, für Dünge- oder Bodenverbesserungsmittel oder für Tierfuttermittel, wobei im letzteren Falle das Behältnis auch so ausgestaltet werden kann, daß es vom Tier mitverzehrbar ist. Soweit bieten sich die verwendeten Materialien nicht nur als Transportbehältnis für Trokkenfutter für Haustiere wie Hundefutter, Schweinefutter o.ä. an, sondern auch für die Versorung von Wildtieren beispielsweise während der Winterfütterung.

Die Erfindung wird im folgenden anhand der Beispiele näher erläutert:

### Beispiel 1

Aus Rinderhautspalten werden sauergequollene Kollagenschwarten nach einem den Fachmann geläufigen Aufbereitungsverfahren beispielsweise entsprechend der DE-PS 659 490 hergestellt.
Der Trockenmassegehalt beträgt etwa 18 Gew.-%. Diese Kollagenschwarten werden dann in einer an sich bekannten Form grob vorzerkleinert.

Die zerkleinerte Rohmasse wird dann in einem entsprechenden Ansatzbehälter mit etwa der doppelten Menge zerkleinertem Eis, der 4,5-fachen Menge Wasser, etwa der hundertstel Menge Sorbit und einer etwa vierhundertstel Menge Glycerin aufgerührt und sorgfältig vermischt. Der pH-Wert des Ansatzes wird mit Salzsäure auf pH 2,8 eingestellt.

Die Mischung wird dann teilweise entwässert und entlüftet, bis eine homogen erscheinende, gelartig gequollene Dispersion mit einem pH-Wert von 2,8 vorliegt. Falls gewünscht, können dieser Mischungen andere physiologisch unbedenkliche organische Polymere wie beispielsweise Carrageen zugesetzt werden.

Die Mischung wird anschließend über eine Schlitzdüse auf ein Endlostransportband extrudiert, das einen Trockentunnel durchläuft. Vor Abschluß des Trockenvorganges werden die Folien dann ammoniakbegast, bis der pH-Wert der fertigen Flachfolie etwa 5 beträgt. Nach dem Trocknen wird die Folie rekonditioniert durch Anheben des Wassergehaltes auf etwa 15 Gew.-%.

### Beispiel 2

Aus Flach- oder Rundfolien wurden Beutel hergestellt, und zwar nach zwei verschiedenen Nähtechniken. Bei der Technik A wurden die Ecken des Beutels mit einem 2 cm breiten Kollagenstreifen abgedeckt und die Beutelöffnung im Zickzackstich vernäht. Bei der Technik C wurden die Öffnungen der Beutel gekändelt. Von diesen Beuteln wurden dann 70 mm breite und 50 mm lange Streifen so abgeschnitten, daß sich die Nahtstelle etwa in der Mitte des Streifens befand. Die beiden Enden der Streifen wurden dann in die zwei Klammern einer Maschine zur Bestimmung der Zugfestigkeit eingespannt, so daß die Nahtstelle sich in der Mitte zwischen den Klammern befand. Eine Klammer wurde dann mit einer Geschwindigkeit von 500 mm/Min. bewegt, so daß der Widerstand der Probe gegen diese Bewegung gemessen werden konnte. Die Proben wurden sowohl im konditionierten Zustand (70% relative Luftfeuchtigkeit/25°C), in der Tabelle als I bezeichnet und nach 20-minütigem Einweichen in Leitungswasser, in der Tabelle als Zustand II bezeichnet, untersucht. Jede Messung wurde an sechs verschiedenen Proben durchgeführt und der Mittelwert gebildet.

Die Ergebnisse sind in der nachfolgenden Tabelle zusammengestellt:

| Material | Nähtechnik | Zustand | Zugfestigkeit in N |
|---|---|---|---|
| 1 | A | I | 82 |
| 1 | C | I | 58 |
| 1 | A | II | 52 |
| 1 | C | II | 37 |
| | | | |
| 2 | A | I | 70 |
| 2 | C | I | 57 |
| 2 | A | II | 55 |
| 2 | C | II | 31 |
| Material 1 = Wandstärke 80 5µm | | | |
| Material 2 = Wandstärke 90 10µm | | | |

Die Reißfestigkeit von ungenähten Kollagenfolien liegt in der Regel höher, aber bei diesen Untersuchungen wurde mit Beuteln gearbeitet, die genäht worden waren, wobei das Material dabei perforiert, also vorgeschädigt wird. Trotzdem bleiben bei dieser Fertigungstechnik noch hinreichende Zugfestigkeiten erhalten, die bei anderen Verschlußtechniken noch deutlich höher liegen. Wie die Ergegnisse zeigen, nimmt die Zugfestigkeit im nassen Zustand deutlich ab, aber solche Bedingungen sind extrem, da eine vollständige, einem Einweichen gleichende Durchfeuchtung in der Praxis nicht zu erwarten ist.

## Patentansprüche

1. Biologisch abbaubare Sammel- oder Transportbehältnisse in Form eines Sackes oder Beutels für Müll, Agrarprodukte, Dünge- und Bodenverbesserungsmittel sowie Tierfuttermittel auf Basis von Kollagen, dadurch gekennzeichnet, daß sie mindestens 50%, bezogen auf das Trockengewicht, Kollagenfasern enthalten und das Material eine Reißfestigkeit von mindestens 10 N bei 70% relativer Feuchtigkeit aufweist.

2. Sammel- oder Transportbehältnisse nach Anspruch 1, dadurch gekennzeichnet, daß das Material außerdem andere Proteine, Hydrokolloide, Stärken, Cellulosen, Polysaccharide oder hydrophile ökologisch unbedenkliche synthetische Polymere enthält.

3. Sammel- oder Transportbehältnisse nach Anspruch 1 oder 2, dadurch gekennzeichnet, daß das Kollagenfasermaterial in Folienform vorliegt.

4. Sammel- oder Transportbehältnisse nach Anspruch 1 bis 3, dadurch gekennzeichnet, daß der Keimgehalt des Materials unter 10.000 KbE/g beträgt.

5. Sammel- oder Transportbehältnisse nach Anspruch 1 bis 4, dadurch gekennzeichnet, daß das Material bei thermischer Hydrolyse im wäßrigen Milieu vollständig in Gelatine überführbar ist.

6. Sammel- oder Transportbehältnisse nach Anspruch 1 bis 5, dadurch gekennzeichnet, daß mindestens ein offenes Ende des Behältnisses vernäht, verschweißt, verklebt oder mit einem Clip verschlossen ist.

7. Sammel- oder Transportbehältnisse nach Anspruch 1 bis 6, dadurch gekennzeichnet, daß mindestens ein offenes Ende des Behältnisses mit einem Schnellverschluß versehen ist.

8. Sammel- oder Transportbehältnisse nach Anspruch 1 bis 7, dadurch gekennzeichnet, daß es eine Innenbeschichtung oder -lackierung mit einem ökologisch unbedenklichen Polymeren aufweist.

9. Verwendung der Sammel- oder Transportbehältnisse nach Anspruch 1 bis 8 zum Lagern oder Transportieren von Agrarprodukten, Dünge- oder Bodenverbesserungsmitteln, Haus- oder Gewerbemüll oder Tierfuttermitteln.

10. Verwendung nach Anspruch 9 als durch das Tier mitverzehrbarer Transportbehälter für Tierfuttermittel.

## Claims

1. Biodegradable collagen-based collecting or transporting containers in the form of a sack or bag for refuse, agricultural products, fertilisers and soil conditioners as well as animal feed, characterised in that they contain at least 50%, related to the dry weight, collagen fibres and the material has a tear resistance of at least 10 N at 70% relative moisture.

2. Collecting or transporting containers according to Claim 1, characterised in that the material additionally contains other proteins, hydrocolloids, starches, celluloses, polysaccharides or hydrophilic, synthetic environmentally-friendly polymers.

3. Collecting or transporting containers according to Claim 1 or 2, characterised in that the collagen fibre material is present in sheet form.

4. Collecting or transporting containers according to Claim 1 to 3, characterised in that the germ content of the material is below 10,000 cfu/g [colony-forming units/g].

5. Collecting or transporting containers according to Claim 1 to 4, characterised in that the material is totally convertible into gelatine in the event of thermal hydrolysis in an aqueous medium.

6. Collecting or transporting containers according to Claim 1 to 5, characterised in that at least one open end of the container is sewn up, bonded, stuck together or closed by means of a clip.

7. Collecting or transporting containers according to Claim 1 to 6, characterised in that at least one open end of the container is provided with a quick acting closure.

8. Collecting or transporting containers according to Claim 1 to 7, characterised in that it has an inner covering or coating with an environmentally-friendly polymer.

9. Utilisation of the collecting or transporting containers according to Claim 1 to 8 for storing or transporting agricultural products, fertilisers or soil conditioners, household or industrial waste or animal feed.

10. Utilisation according to Claim 9 as a transporting container for animal feed, consumable by the animal together with the feed.

## Revendications

1. Récipients de ramassage ou de transport, biologiquement dégradables, sous forme de sac ou de sachet, pour les ordures, les produits agricoles, les engrais et les agents d'amendement du sol ainsi que les aliments pour les animaux, à base de collagène, caractérisés en ce qu'ils contiennent au moins 50 % de fibres de collagène, ce pourcentage étant rapporté au poids à sec, et en ce que la matière présente une résistance à la rupture d'au moins 10 N à une humidité relative de 70 %.

2. Récipients de ramassage ou de transport selon la revendication 1, caractérisés en ce que la matière contient en outre d'autres protéines, des hydrocolloïdes, des amidons, des celluloses, des polysacharrides ou des polymères synthétiques hydrophiles, sans inconvénient pour l'environnement.

3. Récipients de ramassage ou de transport selon la revendication 1 ou 2, caractérisés en ce que la matière à base de fibres de collagène se présente sous la forme de feuilles.

4. Récipients de ramassage ou de transport selon l'une quelconque des revendications 1 à 3, caractérisés en ce que la teneur en germes de la matière est inférieure à 10 000 unités formant des colonies par gramme.

5. Récipients de ramassage ou de transport selon l'une quelconque des revendications 1 à 4, caractérisés en ce que la matière est entièrement transformable en gélatine par hydrolyse à chaud en milieu aqueux.

6. Récipients de ramassage ou de transport selon l'une quelconque des revendications 1 à 5, caractérisés en ce qu'au moins une extrémité ouverte du récipient est cousue, soudée, collée ou fermée par un clip.

7. Récipients de ramassage ou de transport selon l'une quelconque des revendications 1 à 6, caractérisés en ce qu'au moins une extrémité ouverte du récipient est munie d'une fermeture rapide.

8. Récipients de ramassage ou de transport selon l'une quelconque des revendications 1 à 7, caractérisés en ce qu'ils présentent un revêtement ou un laquage interne, constitué d'un polymère sans inconvénient pour l'environnement.

9. Utilisation des récipients de ramassage ou de transport selon l'une quelconque des revendications 1 à 8, pour le stockage ou le transport de produits agricoles, d'engrais ou de produits d'amendement du sol, d'ordures ménagères ou de déchets industriels, ou d'aliments pour les animaux.

10. Utilisation selon la revendication 9 en tant que récipients de transport pour des aliments pour les animaux, également consommables par les animaux.
